# EUROPÄISCHE PATENTSCHRIFT

(11) **EP 2 186 996 B1**
(45) Veröffentlichungstag und Bekanntmachung des Hinweises auf die Patenterteilung: **18.04.2012**
(21) Anmeldenummer: 09012437.1
(22) Anmeldetag: 01.10.2009
(51) Int. Cl.: F01D 5/02, F01D 25/16, F02C 6/12, F02C 7/36, F01D 21/06, F04D 29/051, F16C 17/20

(54) **Rotor einer Turbomaschine**
Rotor for a turbomachine
Rotor de turbomachine

(30) Priorität: 12.11.2008 DE 102008056851
(43) Veröffentlichungstag der Anmeldung: 19.05.2010
(73) Patentinhaber: ATLAS COPCO ENERGAS GMBH, 50999 Köln (DE)
(72) Erfinder: Bosen, Werner, Dipl.-Ing., 51143 Köln (DE)
(74) Vertreter: Albrecht, Rainer Harald

(56) Entgegenhaltungen:
- EP-A1- 0 029 075
- EP-A1- 1 593 818
- WO-A1-2008/032430
- DE-A1-102004 061 407
- DE-B3-102006 049 516

## Beschreibung

Die Erfindung betrifft eine Turbomaschine mit einem Rotor und einem Großrad, insbesondere Integralgetriebe-Turbomaschine, wobei eine Ritzelwelle und zumindest ein Laufrad Bestandteile des Rotors sind und der Rotor durch Axiallager geführt wird und wobei der Rotor als zusätzliches axiales Führungselement zumindest einen Druckkamm aufweist.

In der Regel bestehen Rotoren von Integralgetriebe-Turbomaschinen im Wesentlichen aus der Ritzelwelle eines Stirnradgetriebes und Laufrädern. Dabei kann entweder nur an einem Wellenende ein Laufrad angebracht sein oder es können beide Wellenenden mit Laufrädern versehen werden. Je nach Einsatzzweck der Turbomaschine kommen Turboverdichter- oder Expansionsturbinen-Laufräder zum Einsatz.

Der Antrieb eines Turboverdichter-Rotors erfolgt über ein Integralstirnradgetriebe, während ein Expansionsturbinen-Rotor über ein Integralstirnradgetriebe entweder einen Generator antreibt, der mit einer langsam laufenden Großradwelle gekuppelt ist, oder weitere Turboverdichter-Rotoren antreibt, die um das gemeinsame Großrad angeordnet sind. Miteinander kämmende Zahnräder des Getriebes, deren Verzahnungen schräg zu ihren Rotationsachsen verlaufen, erzeugen beim Übertragen eines Drehmoments eine Axialkraft, die abgestützt werden muss, um den Eingriff der Zahnräder zu gewährleisten. Gleichzeitig erzeugen Strömungskräfte an den Laufrädern Axialkräfte, die abgestützt werden müssen. In der Regel stützen sich die Axialkräfte über die Wellen, auf denen die Zahnräder und Laufräder befestigt sind, über Axiallager am Gehäuse ab. Die Lager, die den Rotor in axialer Richtung der Ritzelwelle führen, haben ein gewisses Spiel.

Wirkt ein zu starker axialer Bewegungsimpuls auf die Axiallager wird das Spiel überwunden und es kommt zu einem Versagen der axialen Führung. Dies kann zu schweren Schäden an der Turbomaschine führen. Eine Beschädigung kann darin bestehen, dass ein Laufrad mit seiner Beschaufelung die eng benachbarten Gegenflächen des Gehäuses streift. Dabei kommt es entweder direkt zu einer Berührung zwischen Laufrad und Gehäuse oder indirekt über die Dichtungselemente des Laufrads. Insbesondere bei Turbomaschinen, die reinen Sauerstoff entweder verdichten oder entspannen, kann ein Anstreifen des Laufrads am Gehäuse fatale Folgen haben. Die Verursachung von Reibungswärme oder Funkenbildung kann einen katastrophalen Maschinenbrand auslösen.

Um solche Schäden zu vermeiden, ist es üblich, die axiale Verschiebung während des Betriebs des Rotors messtechnisch zu erfassen. Bei Überschreiten eines Grenzwertes werden geeignete Sicherheitsmaßnahmen getroffen. Diese können entweder darin bestehen, dass ein Betriebsalarm ausgelöst wird oder der Antrieb des Rotors abgeschaltet wird. Beide Maßnahmen können auch gleichzeitig angewendet werden.

Nach einer Abschaltung des Antriebs kommt es zu einem Auslaufen der Turbomaschine. Dieses Auslaufen kann eine längere Zeitspanne in Anspruch nehmen, bis es zum Stillstand des Rotors kommt. Dies liegt an den meist sehr hohen Betriebsdrehzahlen von Turbomaschinen und ihrem hohen Massenträgheitsmoment. Zu dem hohen Massenträgheitsmoment trägt der gesamte Maschinenstrang bei.

Aufgrund der einmal in axialer Richtung beschleunigten Rotormasse wirkt der axiale Bewegungsimpuls auch während der Auslaufzeit weiter. Dies führt zu einer weiteren axialen Verschiebung während des Auslaufens, so dass es auch noch nach einer Sicherheitsabschaltung zu einer Schädigung der Turbomaschine kommen kann.

Bei einer aus EP 0 029 075 A1 bekannten Gasturbine, sind ein Verdichter und eine Turbine auf einer Welle angeordnet, die verdichterseitig in einem Axiallager gelagert ist. Die Welle ist mittels einer starren Verbindung mit einer Getriebewelle verbunden, auf welcher ein Antriebszahnrad angeordnet ist. Das Antriebszahnrad ist mittels einer weiteren starren Verbindung mit einem Brenngasverdichter verbunden, der das Antriebszahnrad mit Axialschub beaufschlagt. Damit der Axialschub nicht in Richtung der Turbine auf das Axiallager wirkt, sind an dem Antriebszahnrad Druckkämme angeordnet, die den axialen Schub ausgleichen.

Aus der EP 1 593 818 A1 ist eine Turbomaschine bekannt, in der ein Verdichterlaufrad auf einer Rotorwelle angeordnet ist, die in einer ein hydrodynamisches Axiallager enthaltenden Lageranordnungen gelagert ist. Bei der bekannten Turbomaschine führen schon die hohen Vordrücke des zu verdichtenden Fluids zu hohen Axialschüben im Stillstand. Die Stillstandssowie die Anfahrtsaxialkräfte werden von dem hydrodynamischen Lager aufgenommen. Zur Unterstützung während des Stillstandes und des Anfahrtprozesses ist zusätzlich zu dem hydrodynamischen Lager auch ein hydrostatisches Lager vorgesehen, welches die Axialkraft ganz oder zumindest größtenteils aufnimmt.

Aufgabe der vorliegenden Erfindung ist es, bei einer Überlastung der Axiallager eine unzulässige axiale Verschiebung, die zu einer Schädigung der Turbomaschine führen würde, zu verhindern.

Diese Aufgabe wird erfindungsgemäß dadurch gelöst, dass das Spiel zwischen den Druckkammflächen und den Anlaufflächen eines Zahnrades größer ist, als das Spiel der Axiallager. Im Normalbetrieb übernehmen die Axiallager die Führung des Rotors. Kommt es zu einer Überlastung der Axiallager aufgrund der Überbrückung des Lagerspiels, so übernimmt der Druckkamm die notwendige axiale Führung.

Druckkämme sind scheibenförmige Lagerelemente, die an den kämmenden Zahnrädern stirnseitig angeordnet sind, indem sie an die Zahnräder angeformt oder als separates Bauteil in geeigneter Weise fixiert sind. Eine Scheibe des Druckkamms, die an der Ritzelwelle befestigt ist, überschneidet dabei radial eine Gegenseite an einem Zahnrad, wobei beide aufeinander gleiten.

Erfindungsgemäß werden zwei selbstständige axiale Führungssysteme, nämlich Axiallager und Druckkamm, parallel eingesetzt. Da das Druckkammspiel größer ist als das Spiel der Axiallager, kommt den Druckkammflächen erst dann eine axiale Führungsfunktion zu, wenn eine bestimmte axiale Verschiebung überschritten wurde. Beide axiale Führungssysteme sind an der gemeinsamen Ritzelwelle des Rotors positioniert. Sie werden so aufeinander abgestimmt, dass im Normalbetrieb das Axiallager den Rotor führt, während der Druckkamm im Normalbetrieb noch mit einem tolerierbaren Spiel zu seiner Anlagefläche am Großrad betrieben wird.

In einer besonders günstigen Ausführungsform der Erfindung wird zusätzlich die axiale Verschiebung des Rotors messtechnisch erfasst. Bei Überschreitung eines Grenzwertes wird der Antrieb des Rotors abgeschaltet. Erfindungsgemäß werden somit die parallele Anwendung von zwei selbstständigen axialen Führungssystemen und die messtechnische Erfassung der axialen Verschiebung miteinander kombiniert.

Die axiale Verschiebung kann über eine Näherungssonde gemessen werden. Bei Überschreitung eines Grenzwertes wird der Antrieb des Rotors abgeschaltet.

Es ist auch möglich, die axiale Verschiebung des Rotors indirekt durch Temperaturmessungen in den Axiallagern zu überwachen. In den durch Axialschub belasteten Tragelementen kommt es zu einer Erwärmung innerhalb der belasteten Zonen. Eine axiale Verschiebung des Rotors führt zu Erwärmungen in den Axiallagern. Die Erwärmung wird durch Temperaturfühler erfasst. Bei Überschreiten einer Grenztemperatur wird der Antrieb der Turbomaschine abgeschaltet.

Nach einer Abschaltung des Antriebs läuft der Rotor aus und kommt erst nach einer längeren Zeitspanne zum Stillstand. Sollte es während dieser Auslaufphase zu einer weiteren axialen Verschiebung kommen, so übernimmt erfindungsgemäß ein Druckkamm die axiale Führung. Somit wird in der Auslaufphase verhindert, dass es zu Schäden an der Turbomaschine kommt.

Der Druckkamm wird im Normalbetrieb nicht belastet. Er kommt erst im Störfall zum Einsatz. Somit ist der Druckkamm bei seinem erstmaligen Einsatz noch voll funktionsfähig. Die axialen Druckkammflächen werden bis zum Auftreten der Betriebsstörung nicht beansprucht und sind somit noch voll belastbar. Zudem wird die axiale Belastung des Druckkamms beim Auslaufen mit Abnahme der Drehzahl kleiner.

Während einer Betriebsstörung kann die axiale Führung des Rotors entweder von zwei Druckkämmen oder nur von einem Druckkamm übernommen werden.

Kommen zwei Druckkämme zum Einsatz, so weist jeder dieser Druckkämme eine Druckkammfläche auf. Je nachdem, in welche Richtung die axiale Verschiebung des Rotors erfolgt, übernimmt die Druckkammfläche des einen Druckkamms oder die Druckkammfläche des anderen Druckkamms die Führungsfunktion, indem sie gegen die entsprechende Anlauffläche des Zahnrades läuft.

Alternativ ist es auch möglich, dass nur ein Druckkamm zum Einsatz kommt, an dem beide Druckkammflächen vorhanden sind. Im Störfall übernimmt somit je nach Richtung der axialen Verschiebung entweder die eine Fläche oder die andere Fläche des Druckkamms die axiale Führung.

Kommt nur ein Druckkamm zum Einsatz, so erweist es sich als besonders vorteilhaft, wenn die Anlaufflächen, gegen die die Druckkammflächen im Störfall laufen, durch die Seitenwände einer Nut gebildet werden. Vorzugsweise verläuft die Nut um ein Zahnrad des Stirnradgetriebes.

Sowohl die Axiallager als auch der Druckkamm werden vorzugsweise an einer gemeinsamen Ritzelwelle eines Stirnradgetriebes der Turbomaschine positioniert. Die Druckkämme können auf unterschiedliche Weise an der Welle befestigt werden. So können sie entweder an die Welle angeformt oder als separates Bauteil an der Welle fixiert sein.

Vorzugsweise ist das Spiel zwischen einer Druckkammfläche und einer Anlauffläche kleiner als der Betriebsspalt zwischen der Beschaufelung eines offenen Laufrads und der Gehäusewand der Turbomaschine. Kommt es zum Versagen eines Axiallagers, wird aufgrund dieser unterschiedlichen Abmessungen verhindert, dass es zu einem Anstreifen des Laufrades am Gehäuse kommt. Sind beide Laufräder von offener Bauart, so tritt jeweils an jedem dieser Laufräder ein Betriebsspalt auf. In diesem Fall müssen beide Druckkammspiele kleiner sein als die Betriebsspalte.

Es erweist sich als vorteilhaft, wenn das Spiel zwischen einer Druckkammfläche und einer Anlauffläche kleiner ist als das Dichtungsspiel zwischen dem Laufradlabyrinth eines Laufrades mit Deckscheibe und dem Labyrinth-Gegenring. Dadurch wird verhindert, dass es zu einem Anstreifen des Laufradlabyrinths an dem fest installierten Labyrinth-Gegenring kommt.

Sind beide Laufräder mit Deckscheiben versehen, so tritt an jedem Laufrad ein Dichtungsspiel zwischen dem Laufradlabyrinth und dem fest installierten Labyrinth-Gegenring auf. In diesem Fall müssen beide Druckkammspiele kleiner sein als die Dichtungsspiele zwischen den Laufradlabyrinthen und den fest installierten Labyrinth-Gegenringen.

Die erfindungsgemäße Turbomaschine ist in unterschiedlichen Ausführungsformen einsetzbar. So kann am Rotor entweder nur ein Laufrad installiert oder es können an beiden Enden der Ritzelwelle Laufräder vorhanden sein. Dabei können sowohl Turboverdichter-Laufräder als auch Expansionsturbinen-Laufräder zum Einsatz kommen. Umfasst der Rotor zwei Laufräder, so kann es sich dabei jeweils um zwei Turboverdichter-Laufräder oder um zwei Expansionsturbinen-Laufräder handeln. Es ist auch denkbar, dass gleichzeitig ein Turboverdichter-Laufrad und ein Expansionsturbinen-Laufrad eingesetzt werden.

Als besonders günstig erweist sich ein Einsatz der erfindungsgemäßen Turbomaschine bei der Kompression bzw. Expansion von reinem Sauerstoff bzw. von Gasgemischen mit einem hohen Sauerstoffanteil. Werden solche Stoffgemische entweder verdichtet oder entspannt, kann bereits die geringste Funkenbildung bzw. die Reibungswärme, die bei einem Anstreifen von Laufrädern am Gehäuse entsteht, zu einem katastrophalen Maschinenbrand führen.

Weitere Merkmale und Vorteile der Erfindung ergeben sich aus der Beschreibung von Ausführungsbeispielen anhand von Zeichnungen und aus den Zeichnungen selbst. Dabei zeigt
- Fig. 1: einen Rotor mit zwei Druckkämmen,
- Fig. 2: einen Rotor mit einem Druckkamm.

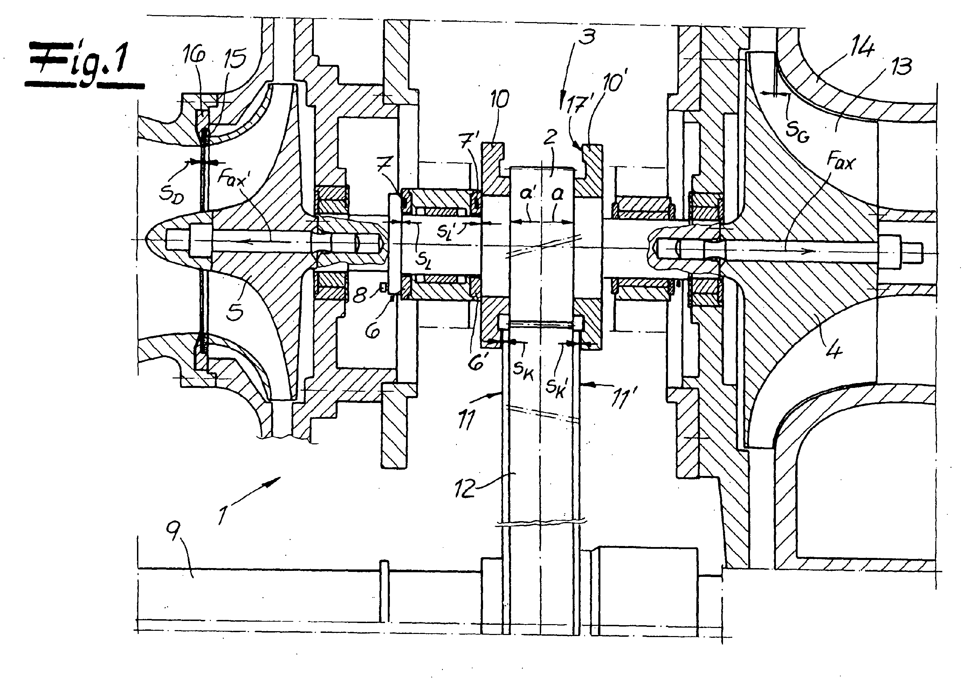

In Figur 1 ist der Rotor 1 einer Turbomaschine mit einer Ritzelwelle 2 eines Stirnradgetriebes 3 dargestellt. Am Rotor 1 ist ein offenes Turboverdichter-Laufrad 4 und ein Laufrad 5 mit Deckscheibe installiert. Die axiale Führung erfolgt durch die Axiallager 6, 6'.

Eine axiale Verschiebung a bzw. a' des Rotors 1 wird durch eine berührungsfreie Näherungssonde 8 gemessen. Die axiale Verschiebung führt zu einer Erwärmung in den Axiallagern 6 bzw. 6', die durch Temperaturfühler 7 bzw. 7', erfasst wird. Ein überhöhter Achsschub Fₐₓ bzw. Fₐₓ' kann dazu führen, dass eines der Axiallager 6 bzw. 6' überlastet wird. Bei Überschreitung gewisser Grenzwerte, die auf eine drohende Überbrückung des Axiallagerspiels S_{L} bzw. S_{L}' hindeuten, kommt es zum Abschalten des Antriebs der Antriebswelle 9 des Stirnradgetriebes 3. Nach Abschaltung des Antriebs läuft der Rotor 1 noch längere Zeit bis zum Stillstand aus.

Falls beim Auslauf des Rotors 1 der noch vorhandene Achsschub Fₐₓ bzw. Fₐₓ' zu einer weiteren axialen Verschiebung führt, wird erfindungsgemäß der Rotor 1 ab einem gewissen Punkt an einer unzulässigen axialen Verschiebung gehindert. Dies geschieht durch einen Druckkamm 10 bzw. 10'. Die Druckkämme 10 bzw. 10' sind als separate Teile ausgeführt und auf der Ritzelwelle 2 befestigt. Übernimmt ein Druckkamm 10 bzw. 10' die axiale Führungsfunktion so läuft die betroffene Druckkammfläche 17 bzw. 17' gegen die korrespondierende Anlauffläche 11 bzw. 11' des Großrades 12 des Stirnradgetriebes 3.

Im Normalbetrieb übernehmen die Axiallager 6 bzw. 6' die axiale Führung. Erst im Störfall, bei einer Überlastung der Axiallager, kommt den Druckkämmen 10 bzw. 10' eine axiale Führungsfunktion zu. Dies wird dadurch gewährleistet, dass die axialen Druckkammspiele S_{K} bzw. S_{K} etwas größer sind als die Axiallagerspiele S_{L} bzw. S_{L}'.

Ein Anstreifen der Laufräder an der Gehäusewand wird dadurch verhindert, dass das axiale Druckkammspiel S_{K} sehr viel kleiner ist, als der Betriebsspalt S_{G} zwischen der Laufbeschaufelung 13 des offenen Turboverdichter-Laufrads 4 und der festen Gehäusewand 14.

Ebenso ist das Druckkammspiel S_{K} deutlich kleiner als das Dichtungsspiel S_{D} zwischen dem Laufradlabyrinth 15 des Turboverdichter-Laufrads 5 mit Deckscheibe und dem fest installierten Labyrinth-Gegenring 16.

Da die axialen Druckkammspiele S_{K} bzw. S_{K}' größer sind als die Axiallagerspiele S_{L} bzw. S_{L}', laufen die beiden Druckkammflächen 17 bzw. 17' während des Normalbetriebs völlig unbelastet. Die Druckkämme sind beim Auslaufen des Rotors 1 in der Lage, eine unzulässige axiale Verschiebung des Rotors 1 und somit ein Anstreifen der Laufrad-Beschaufelung 13 an der Gehäusewand 14 bzw. ein Anstreifen des Laufradlabyrinths 15 an dem fest installierten Labyrinth-Gegenring 16 zu verhindern.

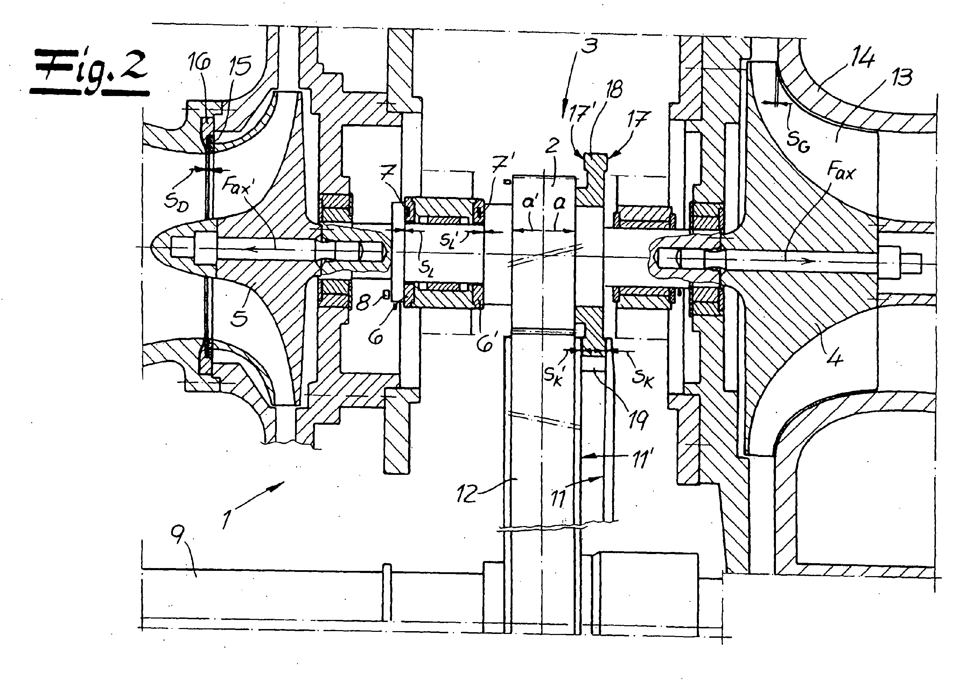

In Fig. 2 übernimmt im Falle des Versagens eines der beiden Axiallager 6 bzw. 6' nur ein Druckkamm 18 die axiale Führung. Am Druckkamm 18 befinden sich beide Druckkammflächen 17 bzw. 17'. Der Druckkamm 18 dreht sich in einer Nut 19 des Großrades 12. Die Nut 19 läuft um das Großrad 12 herum. Die Nut 19 ist radial nach außen offen. Die Anlaufflächen 11 bzw. 11' werden durch die Seitenwände der Nut 19 gebildet. Zwischen den Druckkammflächen 17 bzw. 17' und den Anlaufflächen 11 bzw. 11' besteht ein Spiel S_{K} bzw. S_{K}'. Kommt es zu einer Überlastung der Axiallager so übernimmt im Störungsbetrieb der Druckkamm 18 die Führungsfunktion. Dabei läuft die jeweilige Druckkammfläche 17 bzw. 17' gegen die korrespondierende Anlauffläche 11 bzw. 11'.

## Patentansprüche

1. Turbomaschine mit einem Rotor (1) und einem Großrad (12), wobei eine Ritzelwelle (2) und zumindest ein Laufrad (4, 5) Bestandteile des Rotors (1) sind und der Rotor (1) durch Axiallager (6, 6') geführt wird und wobei der Rotor (1) als zusätzliches axiales Führungselement zumindest einen Druckkamm (10, 10') aufweist, **dadurch gekennzeichnet, dass** das Spiel (S_{K}, S_{K}') zwischen den Druckkammflächen (17, 17') und den Anlaufflächen (11, 11') des Großrades (12) größer ist als das Spiel (S_{L}, S_{L}') der Axiallager (6, 6').

2. Turbomaschine nach Anspruch 1, **dadurch gekennzeichnet, dass** die axiale Verschiebung (a, a') des Rotors (1) messtechnisch erfasst wird und bei Überschreitung eines Grenzwertes der Antrieb des Rotors (1) abgeschaltet wird.

3. Turbomaschine nach Anspruch 1, **dadurch gekennzeichnet, dass** bei Versagen eines Axiallagers (6, 6') die entsprechende Druckkammfläche (17, 17') gegen die dazu korrespondierende Anlauffläche (11, 11') des Zahnrades (12) läuft.

4. Turbomaschine nach Anspruch 1, **dadurch gekennzeichnet, dass** beide axiale Führungselemente (6, 6; 10, 10') an einer gemeinsamen Welle (2) des Rotors (1) positioniert sind.

5. Turbomaschine nach Anspruch 1, **dadurch gekennzeichnet, dass** das Spiel (S_{K}) zwischen einer Druckkammfläche (17) und einer Anlauffläche (11) kleiner ist als der Betriebsspalt (S_{G}) zwischen der Beschaufelung (13) eines offenen Laufrads (4) und der Gehäusewand (14) der Turbomaschine.

6. Turbomaschine nach Anspruch 1, **dadurch gekennzeichnet, dass** das Spiel (S_{K}') zwischen einer Druckkammfläche (17') und einer Anlauffläche (11') kleiner ist als das Dichtungsspiel (S_{D}) zwischen dem Laufradlabyrinth (15) eines Laufrades (5) mit Deckscheibe und dem Labyrinth-Gegenring (16).

7. Turbomaschine nach Anspruch 1, **dadurch gekennzeichnet, dass** der Rotor (1) zwei Druckkämme (10, 10') aufweist, wobei jeder Druckkamm (10, 10') eine Druckkammfläche (17, 17') besitzt.

8. Turbomaschine nach Anspruch 1, **dadurch gekennzeichnet, dass** der Rotor (1) einen Druckkamm (18) aufweist, an dem beide Druckkammflächen (17, 17') vorhanden sind.

9. Turbomaschine nach Anspruch 8, **dadurch gekennzeichnet, dass** die Anlaufflächen (11, 11') durch die Seitenwände einer Nut (19) gebildet werden, wobei die Nut (19) um das Zahnrad (12) läuft.

## Claims

1. A turbomachine with a rotor (1) and a large wheel (12), wherein a pinion shaft (2) and at least one impeller (4, 5) are part of the rotor and the rotor (1) is guided through axial bearings (6, 6') and wherein the rotor (1) as additional axial guiding element comprises at least one pressure crest (10, 10'), **characterized in that** the clearance (S_{K}, S_{K}') between the pressure crest surfaces (17, 17') and the thrust surfaces (11, 11') of the large wheel (12) is greater than the play (S_{L}, S_{L}') of the axial bearings (6, 6').

2. The turbomachine according to Claim 1, **characterized in that** the axial displacement (a, a') of the rotor (1) is captured by technical measurement and upon exceeding of a limit value the drive of the rotor (1) is switched off.

3. The turbomachine according to Claim 1, **characterized in that** upon a failure of an axial bearing (6, 6') the corresponding pressure crest surface (17, 17') runs against the thrust surface (11, 11') of the gear (12) corresponding thereto.

4. The turbomachine according to Claim 1, **characterized in that** both axial guiding elements (6, 6'; 10, 10') are positioned on a common shaft (2) of the rotor (1).

5. The turbomachine according to Claim 1, **characterized in that** the clearance (S_{K}) between a pressure crest surface (17) and a thrust surface (11) is smaller than the operating gap (S_{G}) between the blading (13) of an open impeller (4) and the housing wall (14) of the turbomachine.

6. The turbomachine according to Claim 1, **characterized in that** the clearance (S_{K}') between a pressure crest surface (17') and a thrust surface (11') is smaller than the sealing clearance (S_{D}') between the impeller labyrinth (15) of an impeller (5) with cover disc and the labyrinth mating ring (16).

7. The turbomachine according to Claim 1, **characterized in that** the rotor (1) comprises two pressure crests (10, 10'), wherein each pressure crest (10, 10') comprises a pressure crest surface (17, 17').

8. The turbomachine according to Claim 1, **characterized in that** the rotor (1) comprises a pressure crest (18) on which both pressure crest surfaces (17, 17') are present.

9. The turbomachine according to Claim 8, **characterized in that** the thrust surfaces (11, 11') are formed through the side walls of a groove (19), wherein the groove (19) runs around the gear (12).

## Revendications

1. Turbomachine comportant un rotor (1) et une roue (12), dans laquelle un arbre à pignon (2) et au moins une roue de roulement (4, 5) sont partie intégrante du rotor (1) et le rotor (1) est guidé par l'intermédiaire de paliers axiaux (6, 6') et dans laquelle le rotor (1) présente comme élément de guidage axial supplémentaire au moins un presseur (10, 10'), **caractérisée en ce que** le jeu (S_{K}, S_{K}') entre les surfaces de presseur (17, 17') et les surfaces de roulement (11, 11') de la roue (12) est plus grand que le jeu (S_{L}, S_{L}') des paliers axiaux (6, 6').

2. Turbomachine selon la revendication 1, **caractérisée en ce que** le déplacement axial (a, a') du rotor (1) est relevé selon une technique de mesure et en cas de dépassement d'une valeur limite l'entraînement du rotor (1) est éteint.

3. Turbomachine selon la revendication 1, **caractérisée en ce que** en cas de défaillance d'un palier axial (6, 6') la surface de presseur correspondante (17, 17') roule contre la surface de roulement (11, 11') qui lui correspond de la roue dentée (12).

4. Turbomachine selon la revendication 1, **caractérisée en ce que** les deux éléments de guidage axiaux (6, 6'; 10, 10') sont positionnés sur un arbre commun (2) du rotor (1).

5. Turbomachine selon la revendication 1, **caractérisée en ce que** le jeu (S_{K}) entre une surface de presseur (17) et une surface de roulement (11) est plus petit que l'entrefer de fonctionnement (S_{G}) entre l'aubage (13) d'une roue de roulement (4) ouverte et la paroi de carter (14) de la turbomachine.

6. Turbomachine selon la revendication 1, **caractérisée en ce que** (S_{K}') entre une surface de presseur (17') et une surface de roulement (11') est plus petit que le jeu d'étanchéité (S_{D}) entre le labyrinthe de roue de roulement (15) d'une roue de roulement (5) avec le couvercle de disque et la contre-bague de labyrinthe (16).

7. Turbomachine selon la revendication 1, **caractérisée en ce que** le rotor (1) présente deux presseurs (10, 10'), dans laquelle chaque presseur (10, 10') possède une surface de presseur (17, 17').

8. Turbomachine selon la revendication 1, **caractérisée en ce que** le rotor (1) présente un presseur (18), sur lequel deux surfaces de presseur (17, 17') sont présentes.

9. Turbomachine selon la revendication 8, **caractérisée en ce que** les surfaces de roulement (11, 11') sont formées par les parois latérales d'une rainure (19), dans laquelle la rainure (19) s'étend autour de la roue dentée (12).
